# EUROPEAN PATENT SPECIFICATION

(11) **EP 2 074 310 B1**
(45) Date of publication and mention of the grant of the patent: **17.06.2015**
(21) Application number: 06816813.7
(22) Date of filing: 12.10.2006
(51) Int. Cl.: F01D 21/14, F02K 1/08, F02K 1/42, F02K 1/70, F02K 1/12

(54) **CONTROLLING THE AERODYNAMIC DRAG OF A GAS TURBINE ENGINE DURING A SHUTDOWN STATE**
STEUERUNG DES AERODYNAMISCHEN WIDERSTANDS EINES TURBINENTRIEBWERKS WÄHREND EINES ABSCHALTZUSTANDS
CONTRÔLE DE LA TRAÎNÉE AÉRODYNAMIQUE D'UN MOTEUR À TURBINE À GAZ AU COURS D'UN ÉTAT D'ARRÊT

(43) Date of publication of application: 01.07.2009
(73) Proprietor: United Technologies Corporation, Hartford, CT 06101 (US)
(72) Inventor: CARMICHAEL, Ray W., Ellington, CT 06108 (US)
(74) Representative: Leckey, David Herbert
(86) International application number: PCT/US2006/039949
(87) International publication number: WO 2008/045066

(56) References cited:
- EP-A2- 1 843 030
- GB-A- 2 198 999
- GB-A- 2 205 903
- US-A- 3 659 422
- US-A- 3 759 467
- US-A- 3 915 413
- US-A- 4 038 818
- US-A- 5 120 005
- US-A- 5 315 821

## Description

### BACKGROUND OF THE INVENTION

This invention relates to gas turbine engines and, more particularly, to a gas turbine engine having a variable fan nozzle that can be adjusted to change the aerodynamic drag of the engine.

Gas turbine engines are widely known and used for power generation and vehicle (e.g., aircraft) propulsion. A typical gas turbine engine includes a gas generator (compression section, a combustion section, and a turbine section) that utilizes a primary airflow into the gas generator to generate power or propel the vehicle. The gas turbine engine is typically mounted within a housing, such as a nacelle. A bypass airflow flows through a passage between the gas generator and the nacelle and exits from the engine at an outlet.

Presently, in the event that certain problems occur with one engine of a multi-engine aircraft, the engine can be shut down and the remaining engines can be used to fly the aircraft. For example, inclement weather, non-optimum trimming of engine idle, fuel nozzle coking, fuel contamination, loss of electric power, fuel mismanagement, pilot error, or the like may, under certain conditions, warrant voluntary or automatic shut down of an engine. Under such a circumstance, aerodynamic drag over the shutdown engine increases aircraft fuel consumption and retards thrust, which limits the range that the aircraft can travel to a destination airport. Although current engines permit a desirable range of travel under such circumstances, there is a trend toward improving the "one engine shutdown" performance to increase the range of travel and enhance maneuverability of the aircraft. This invention addresses this need.

US 3659422 discloses a method and apparatus for aircraft propulsion. US 3759467 discloses a method and means for opposing the rotation of a windmilling turbojet rotor during flight.

US 5315821 discloses a gas turbine engine system.

US-A-3915413 discloses a gas turbine system according to the preamble of claim1.

### SUMMARY OF THE INVENTION

In accordance with the present invention, there is provided a gas turbine engine system as set forth in claim 1.

Also in accordance with the present invention there is provided a method of controlling a gas turbine engine as set forth in claim 9.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows.

Figure 1 is a schematic view of an example gas turbine engine having a nozzle for influencing a bypass airflow in response a shutdown state of the engine.

Figure 2 is a schematic view of an example nozzle for influencing the bypass airflow.

### DETAILED DESCRIPTION OF THE PREFERRED EMBODIMENT

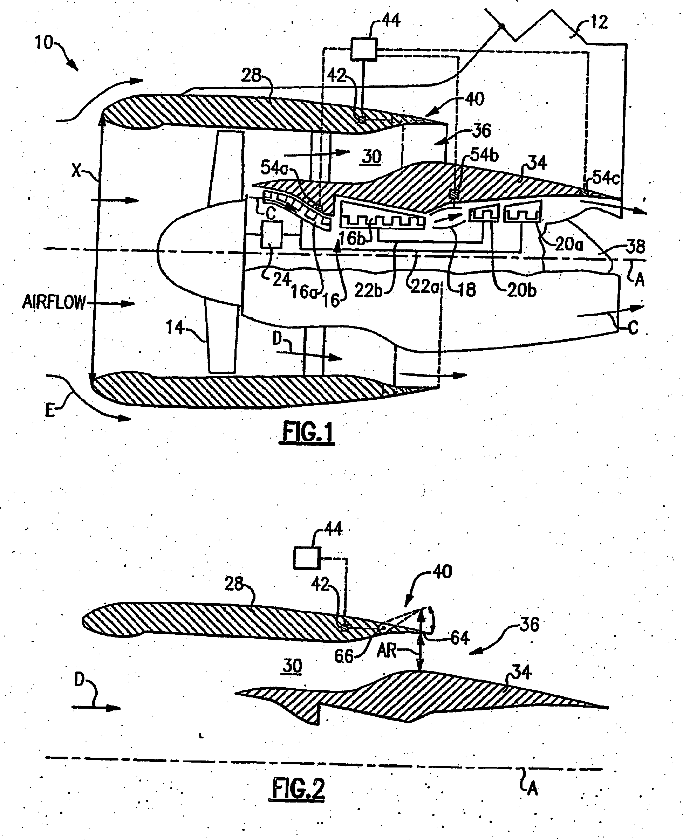

Figure 1 illustrates a schematic view of selected portions of an example gas turbine engine 10 suspended from an engine pylon 12 of an aircraft, as is typical of an aircraft designed for subsonic operation. The gas turbine engine 10 is circumferentially disposed about an engine centerline, or axial centerline axis A. The gas turbine engine 10 includes a fan 14, a low pressure compressor 16a, a high pressure compressor 16b, a combustion section 18, a low pressure turbine 20a, and a high pressure turbine 20b. As is well known in the art, air compressed in the compressors 16a, 16b is mixed with fuel that is burned in the combustion section 18 and expanded in the turbines 20a and 20b. The turbines 20a and 20b are coupled for rotation with, respectively, rotors 22a and 22b (e.g., spools) to rotationally drive the compressors 16a, 16b and the fan 14 in response to the expansion. In this example, the rotor 22a also drives the fan 14 through a gear train 24.

In the example shown, the gas turbine engine 10 is a high bypass turbofan arrangement. In one example, the bypass ratio is greater than 10, and the fan 14 diameter is substantialiy larger than the diameter of the low pressure compressor 16a. The gear train 24 can be any known suitable gear system, such as a planetary gear system with orbiting planet gears, planetary system with non-orbiting planet gears, or other type of gear system, In the disclosed example, the gear train 24 has a constant gear ratio. Given this description, one of ordinary skill in the art will recognize that the above parameters are only exemplary and that other parameters may be used to meet the particular needs of an implementation.

An outer housing, nacelle 28, (also commonly referred to as a fan nacelle) extends circumferentially about the fan 14. A fan bypass passage 30 extends between the nacelle 28 and an inner housing, inner cowl 34, which generally surrounds the compressors 16a, 16b and turbines 20a, 20b.

In operation, the fan 14 draws air into the gas turbine engine 10 as a core flow, C, and into the bypass passage 30 as a bypass air flow, D. In one example, approximately 80 percent of the airflow entering the nacelle 28 becomes bypass airflow D. A rear exhaust 36 discharges the bypass air flow D from the gas turbine engine 10. The core flow C is discharged from a passage between the inner cowl 34 and a tail cone 38. A significant amount of thrust may be provided by the discharge flow due to the high bypass ratio.

The example gas turbine engine 10 shown Figure 1 also includes a nozzle 40 (shown schematically) associated with the bypass passage 30. In this example, the nozzle 40 is shown near the rear of the nacelle 28, however, in other examples, the nozzle is located farther forward but aft of the fan 14. In this example, the nozzle 40 is coupled to the nacelle 28. Alternatively, the nozzle 40 is coupled with the inner cowl 34, or other structural portion of the gas turbine engine 10.

The nozzle 40 is operatively connected with actuators 42 for movement between a plurality of positions to influence the bypass air flow D, such as to manipulate an air pressure of the bypass air flow D. A controller 44 commands the actuators 42 to selectively move the nozzle 40 among the plurality of positions to manipulate the bypass air flow D in a desired manner. The controller 44 may be dedicated to controlling the actuators 42 and nozzle 40, integrated into an existing engine controller within the gas turbine engine 10, or be incorporated with other known aircraft or engine controls. For example, selective movement of the nozzle 40 varies the amount and direction of thrust provided, influences conditions for aircraft control, influences conditions for operation of the fan 14, or influences conditions for operation of other components associated with the bypass passage 30, depending on input parameters into the controller 44.

In one example, the gas turbine engine 10 is designed to operate within a desired performance envelope under certain predetermined conditions, such as cruise. For example, it is desirable to operate the fan 14 under a desired pressure ratio range (i.e., the ratio of air pressure aft of the fan 14 to air pressure forward of the fan 14) to maintain optimum fan efficiency. To maintain this range, the nozzle 40 is used to influence the bypass airflow D to control the air pressure aft of the fan 14 and thereby control the pressure ratio. In some examples, the nozzle varies a cross-sectional area associated with the rear exhaust 36 of the bypass passage 30 by approximately 20% to influence the bypass airflow D. Thus, the nozzle 40 enables the performance envelope to be maintained over a variety of different conditions.

In the illustrated example, the gas turbine engine 10 also includes one or more sensors 54a, 54b,54c in communication with controller 44. Sensor 54a is located near rotor 22a for determining a rotational speed of the rotor 22 a. Sensor 54b is located near the combustor section 18 for determining an amount of fuel flow into the combustor section. Sensor 54c is located near the core flow C to determine a temperature of the core flow C.

The sensors 54a, 54b, 54c detect, respectively, the rotor speed, fuel flow, and core flow C (i.e., exhaust gas stream) temperature data and transmit a signal representative of the data to the controller 44. The controller 44 communicates with one, two, or all of the sensors 54a, 54b, 54c. The controller 44 selectively commands the actuators 42 to move the nozzle 40 to a predetermined desired position in response to a signal that represents a shutdown state of the engine. For example, the nozzle 40 moves from a nominal or scheduled position to the predetermined position.

In one example, the shutdown state corresponds to the rotor 22a rotational speed. For example, if the speed decreases below a threshold speed the controller 44 concludes that the gas turbine engine changed from an active state to the shutdown state.

In another example, the shutdown state corresponds to the fuel flow. For example, if the fuel flow decreases below a threshold fuel flow the controller 44 concludes that the gas turbine engine 10 changed from an active state to the shutdown state.

In another example, the shutdown state corresponds to the temperature of the core flow C. For example, if the temperature decreases below a threshold temperature the controller 44 concludes that the gas turbine engine 10 changed from an active state to the shutdown state.

Alternatively, or in addition any of the rotor speed, fuel flow, and temperature, the shutdown state corresponds to manual shutdown of the gas turbine engine 10 by the pilot in response to an indicator light, a perceived problem such as a decrease in thrust, or other indication to the pilot. Given this description, one of ordinary skill in the art will be able to recognize other characteristics of the gas turbine engine 10 that can be used to identify the shutdown state.

In response to the shutdown state, the controller 44 commands the actuators 42 to move the nozzle 40 to influence the bypass airflow D in a desired manner to decrease aerodynamic drag on the gas turbine engine 10. In this example, the aerodynamic drag includes at least the sum of aerodynamic drag on the outer surface of the nacelle 28, inlet momentum, and the internal aerodynamic drag on the engine 10 from the bypass airflow D and primary airflow C passing thru the engine turbomachinery.

Depending on factors such as a size characteristic of the nacelle 28, the controller 44 increases or decreases the bypass airflow D to reduce the overall aerodynamic drag. Reducing aerodynamic drag provides the benefit of less retarding force on the movement of the aircraft in flight, which increases fuel efficiency, increases the range of travel, and enhances maneuverability.

In one example, the bypass airflow D through the bypass passage 30 produces less aerodynamic drag than an airflow E over the nacelle 28. The controller 44 is programmed to command the nozzle 40 to permit more bypass airflow D through the bypass passage 30, which reduces the amount of airflow E over the nacelle 28 (e.g., spillage airflow). This provides the benefit of reducing the overall aerodynamic drag on the gas turbine engine 10.

In another example, the bypass airflow D through the bypass passage 30 produces more aerodynamic drag than the airflow E over the nacelle 28. The controller 44 is programmed to command the nozzle 40 to permit less bypass airflow D through the bypass passage 30, which increases the amount of airflow E over the nacelle 28 (e.g., from spillage airflow). This provides the benefit of reducing the overall aerodynamic drag on the gas turbine engine 10.

In one example, the aerodynamic drag produced from the bypass airflow D through the bypass passage 30 and the aerodynamic drag from the airflow E over the nacelle 28 is estimated at a design stage of the gas turbine engine 10 such that the controller 44 is pre-programmed to operate the nozzle 40 to reduce the aerodynamic drag. It is to be understood that the controller 44 may also use other factors, such as the instant flight conditions and type of aircraft, to control the nozzle 40 to selectively permit more or less bypass airflow D.

In one example, the overall aerodynamic drag corresponds to a size characteristic of the nacelle 28. For example, the nacelle 28 includes a nominal cross-sectional area, X, at the forward end that is selected during a design stage from among a range of possible cross-sectional areas for the particular engine 10. In this example, the aerodynamic drag from airflow E is larger than the aerodynamic drag from the bypass airflow D for a relatively small nominal cross-sectional area X. For a relatively larger nominal cross-sectional area X, the aerodynamic drag from airflow E is smaller than the aerodynamic drag from bypass airflow D. The controller 44 is then programmed based upon the size of the nacelle 28. For example, the controller 44 is programmed to permit more bypass airflow D for a nacelle 28 having the relatively smaller nominal cross-sectional area X or programmed to permit less bypass airflow D for a nacelle 28 having the relatively larger nominal cross-sectional area X.

Figure 2 illustrates an example of the nozzle 40 for influencing the bypass airflow D. In this example, the nozzle 40 includes flaps 64 that are pivotable about hinges 66. Although only a single flap 64 and hinge 66 are shown in this figure, multiple flaps 64 may be used about the circumference of the engine 10. The hinges 66 are operatively connected with the actuators 42. The controller 44 selectively commands the actuators 42 to pivot the flaps 64 about the respective hinges 66 to vary a cross-sectional area, AR, between the flaps 64 and the inner cowl 34 in this example. In a closed position, the flaps 64 are closer to the inner cowl 34 for a relatively smaller cross-sectional area AR. In an open position, the flaps 64 are farther away from the inner cowl 34 for a relatively larger cross-sectional area AR.

The controller 44 selectively actuates the flaps 64 to control the air pressure of the bypass airflow D within the bypass passage 30. For example, closing the flaps 64 reduces the cross-sectional area AR, which restricts the bypass airflow D and produces a pressure build-up (i.e., an increase in air pressure) within the bypass passage 30. Opening the flaps 64 increases the cross-sectional area AR, which permits more bypass airflow D and reduces the pressure build-up (i.e., a decrease in air pressure). Given this description, one of ordinary skill in the art will be able to recognize other types of nozzles for influencing the bypass airflow D, such as, but not limited to auxiliary passage nozzles and bleed flow nozzles.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine system comprising:
a gas turbine engine (10) having an active state and a shutdown state;
a fan bypass passage (30) associated with the gas turbine engine (10) for conveying a bypass airflow (D);
a nacelle (28) that extends about at least a portion of the bypass passage (30); and
a nozzle (40) forming at least a portion of an exterior surface of the gas turbine engine (10) and forming at least a portion of an outer surface of the fan bypass passage (30) relative to an engine centerline axis (A), **characterised in that** the nozzle (40) comprises at least one flap (64) adjacent the fan bypass passage (30) and at least one actuator (42) connected to the at least one flap (64) to move the at least one flap (64) relative to the fan bypass passage (30) between a plurality of different positions; and **in that** it further comprises
a controller (44) to command the at least one actuator (42) to move the at least one flap (64) to influence the bypass air flow (D) to thereby influence an aerodynamic drag that retards forward movement of the gas turbine engine (10) in flight,
wherein the controller (44) selectively commands the at least one actuator (42) to move the at least one flap (64) relative to the fan bypass passage (30) in response to the shutdown state to decrease the aerodynamic drag on the gas turbine engine (10).

2. The gas turbine engine system recited in claim 1, wherein the active state corresponds to a first fuel flow to the gas turbine engine (10) and the shutdown state corresponds to a second fuel flow to the gas turbine engine (10) that is less than the first fuel flow.

3. The gas turbine engine system recited in claim 1, wherein the gas turbine engine (10) includes a compressor (16a, 16b), a turbine (20a, 20b) downstream from the compressor (16a, 16b), and at least one rotor (22a, 22b) that rotates with the compressor (16a, 16b) and the turbine (20a, 20b), wherein the active state corresponds to a first rotational speed of the rotor (22a, 22b) and the shutdown state corresponds to a second rotational speed of the rotor (22a, 22b) that is less than the first rotational speed.

4. The gas turbine engine system recited in claim 1, wherein the gas turbine engine (10) includes a combustor (18) that combusts fuel to produce an exhaust gas stream (C), wherein the active state corresponds to a first temperature of the exhaust gas stream (C) and the shutdown state corresponds to a second temperature of the exhaust gas stream that is less than the first temperature.

5. The gas turbine engine system recited in claim 1, wherein the gas turbine engine (10) combusts fuel to produce a first thrust in the active state and the gas turbine engine (10) produces a second thrust that is less than the first thrust in the shutdown state.

6. The gas turbine engine system recited in claim 1, further comprising a sensor (54b) that detects a fuel flow to the gas turbine engine, wherein the fuel flow corresponds to the shutdown state, or a sensor (54a) that detects a rotational speed of a rotor (22a) associated with a turbine (20a) and a compressor (16a) in the gas turbine engine (10), wherein the rotational speed corresponds to the shutdown state, or a sensor (54C) that detects a temperature of an exhaust gas stream (C) produced by the gas turbine engine (10), wherein the temperature corresponds to the shutdown state.

7. The gas turbine engine system recited in claim 1, wherein the nozzle (40) includes a first position that permits a first amount of the bypass airflow (D) through the bypass passage (30) and a second position that permits a second amount of the bypass airflow (D) through the bypass passage (30) that is less than the first amount of the bypass flow (D).

8. The gas turbine engine system recited in claim 1, wherein the nacelle includes a forward opening having a selected predetermined cross-sectional area selected from a range of possible predetermined cross-sectional areas, and wherein the controller (44) selectively commands the nozzle (40) to move relative to the fan bypass passage (30) to one of the first position or the second position based upon the selected predetermined cross-sectional area.

9. A method of controlling a gas turbine engine (10) having an active state and a shutdown state, comprising the steps of:
providing a nozzle (40) that is associated with a fan bypass passage (30) of the gas turbine engine (10) to permit influence over a bypass airflow (D) through the fan bypass passage (30) wherein the nozzle (40) comprises at least one flap (64) adjacent the fan bypass passage (30) and at least one actuator (42) connected to the at least one flap (64) to move the at least one flap (64) relative to the fan bypass passage (30) between a plurality of different positions; and
controlling the bypass airflow (D) using the nozzle (40) in response to the shutdown state to decrease an aerodynamic drag on the gas turbine engine (10) by
selecting between moving the flaps (64) to a first position that decreases the bypass airflow (D) through the fan bypass passage (30) and increases an amount of airflow over a nacelle (28) that extends about a fan (14) of the gas turbine engine (10) and moving the flaps (64) to a second position that increases the bypass airflow (D) through the fan bypass passage (30) and decreases the amount of airflow over the nacelle (28) based upon a size characteristic of the nacelle.

10. The method recited in claim 9, including selectively moving the nozzle (40) to one of a plurality of different positions to achieve an increase in the bypass airflow (D) through the fan bypass passage and a decrease in an amount of airflow (E) over a nacelle (28) that extends about a fan (14) of the gas turbine engine (10).

11. The method recited in claim 9, including selectively moving the nozzle (40) to one of a plurality of different positions to achieve a decrease in the bypass airflow (D) through the fan bypass passage (30) and an increase in an amount of airflow (E) over a nacelle (28) that extends about a fan (14) of the gas turbine engine (10).

12. The method recited in claim 9, wherein the aerodynamic drag comprises the sum of at least an aerodynamic drag over a nacelle that extends about a fan of the gas turbine engine and an aerodynamic drag through the fan bypass passage, further including controlling the bypass airflow to decrease the aerodynamic drag.

13. The method recited in claim 9, including moving the nozzle (40) to control the bypass airflow (D) in response to a signal representing a fuel flow to the gas turbine engine (10), or in response to a signal representing a rotational speed of a rotor (22a) associated with a compressor (16a) and a turbine (20a) within the gas turbine engine (10), or in response to a signal representing a temperature of an exhaust gas stream (C) produced by the gas turbine engine (10).

14. The method recited in claim 9, wherein the bypass airflow (D) through the fan bypass passage (30) is decreased to a nonzero amount.

## Patentansprüche

1. Gasturbinentriebwerksystem, umfassend:
ein Gasturbinentriebwerk (10) mit einem aktiven Zustand und einem Abschaltzustand;
einen Gebläseumgehungskanal (30), der dem Gasturbinentriebwerk (10) zugeordnet ist, um einen Umgehungsluftstrom (D) zu leiten;
eine Gondel (28), die sich um wenigstens einen Abschnitt des Umgehungskanals (30) erstreckt; und
eine Düse (40), die wenigstens einen Abschnitt einer äußeren Fläche des Gasturbinentriebwerks (10) bildet und wenigstens einen Abschnitt einer Außenfläche des Gebläseumgehungskanals (30) relativ zu einer Triebwerkmittelachse (A) bildet, **dadurch gekennzeichnet, dass** die Düse (40) wenigstens eine Klappe (64) benachbart zum Gebläseumgehungskanal (30) und wenigstens eine Stellglied (42) umfasst, das mit der wenigstens einen Klappe (64) verbunden ist, um die wenigstens eine Klappe (64) relativ zum Gebläseumgehungskanal (30) zwischen einer Mehrzahl unterschiedlicher Positionen zu bewegen; und dass es ferner Folgendes umfasst
eine Steuereinrichtung (44), um das wenigstens eine Stellglied (42) anzuweisen, die wenigstens eine Klappe (64) zu bewegen, um den Umgehungsluftstrom (D) zu beeinflussen, um dadurch einen aerodynamischen Widerstand zu beeinflussen, der die Vorwärtsbewegung des Gasturbinentriebwerks (10) während des Flugs verlangsamt,
wobei die Steuereinrichtung (44) selektiv das wenigstens eine Stellglied (42) anweist, die wenigstens eine Klappe (64) in Reaktion auf einen Abschaltzustand relativ zum Gebläseumgehungskanal (30) zu bewegen, um den aerodynamischen Widerstand des Gasturbinentriebwerks (10) zu erhöhen.

2. Gasturbinentriebwerksystem nach Anspruch 1, wobei der aktive Zustand einem ersten Treibstofffluss an das Gasturbinentriebwerk (10) entspricht und der Abschaltzustand einem zweiten Treibstofffluss an das Gasturbinentriebwerk (10) entspricht, der kleiner als der erste Treibstofffluss ist.

3. Gasturbinentriebwerksystem nach Anspruch 1, wobei das Gasturbinentriebwerk (10) einen Kompressor (16a, 16b), eine Turbine (20a, 20b) stromabwärts von dem Kompressor (16a, 16b) und wenigstens einen Rotor (22a, 22b) aufweist, der sich mit dem Kompressor (16a, 16b) und der Turbine (20a, 20b) dreht, wobei der aktive Zustand einer ersten Drehzahl des Rotors (22a, 22b) entspricht und der Abschaltzustand einer zweiten Drehzahl des Rotors (22a, 22b) entspricht, die kleiner als die erste Drehzahl ist.

4. Gasturbinentriebwerksystem nach Anspruch 1, wobei das Gasturbinentriebwerk (10) einen Verbrenner (18) aufweist, der Treibstoff verbrennt, um einen Abgasstrom (C) zu erzeugen, wobei der aktive Zustand einer ersten Temperatur des Abgasstroms (C) entspricht und der Abschaltzustand einer zweiten Temperatur des Abgasstroms entspricht, die kleiner als die erste Temperatur ist.

5. Gasturbinentriebwerksystem nach Anspruch 1, wobei das Gasturbinentriebwerk (10) Treibstoff verbrennt, um im aktive Zustand einen ersten Schub zu erzeugen, und das Gasturbinentriebwerk (10) im Abschaltzustand einen zweiten Schub erzeugt, der kleiner als der erste Schub ist.

6. Gasturbinentriebwerksystem nach Anspruch 1, ferner umfassend einen Sensor (54b), der einen Treibstofffluss an das Gasturbinentriebwerk erkennt, wobei der Treibstofffluss dem Abschaltzustand entspricht, oder einen Sensor (54a), der eine Drehzahl eines Rotors (22a) im Zusammenhang mit einer Turbine (20a) und einem Kompressor (16a) in dem Gasturbinentriebwerk (10) erkennt, wobei die Drehzahl dem Abschaltzustand entspricht, oder einen Sensor (54c), der eine Temperatur eines Abgasstroms (C) erkennt, der von dem Gasturbinentriebwerk (10) erzeugt wird, wobei die Temperatur dem Abschaltzustand entspricht.

7. Gasturbinentriebwerksystem nach Anspruch 1, wobei die Düse (40) eine erste Position, die eine erste Menge des Umgehungsluftstroms (D) durch den Umgehungskanal (30) zulässt, und eine zweite Position aufweist, die eine zweite Menge des Umgehungsluftstroms (D) durch den Umgehungskanal (30) zulässt, die kleiner als die erste Menge des Umgehungsstroms (D) ist.

8. Gasturbinentriebwerksystem nach Anspruch 1, wobei die Gondel eine vordere Öffnung mit einem ausgewählten vorgegebenen Querschnitt aufweist, der aus einem Bereich möglicher vorgegebener Querschnitte ausgewählt ist, und wobei die Steuereinrichtung (44) selektiv die Düse (40) anweist, sich auf Grundlage des ausgewählten Querschnitts relativ zu dem Gebläseumgehungskanal (30) in eine von der ersten Position oder der zweiten Position zu bewegen.

9. Verfahren zum Steuern eines Gasturbinentriebwerks (10) mit einem aktiven Zustand und einem Abschaltzustand, folgende Schritte umfassend:
Bereitstellen einer Düse (40), die einem Gebläseumgehungskanal (30) des Gasturbinentriebwerks (10) zugeordnet ist, um Einfluss auf einen Umgehungsluftstrom (D) durch den Gebläseumgehungskanal (30) zuzulassen, wobei die Düse (40) wenigstens eine Klappe (64) benachbart zum Gebläseumgehungskanal (30) und wenigstens ein Stellglied (42) aufweist, das mit der wenigstens einen Klappe (64) verbunden ist, um die wenigstens eine Klappe (64) relativ zum Gebläseumgehungskanal (30) zwischen einer Mehrzahl unterschiedlicher Positionen zu bewegen; und
Steuern des Umgehungsluftstroms (D) mithilfe der Düse (40) in Reaktion auf den Abschaltzustand, um einen aerodynamischen Widerstand des Gasturbinentriebwerk (10) zu erhöhen durch
Auswählen zwischen dem Bewegen der Klappen (64) in eine erste Position, die den Umgehungsluftstrom (D) durch den Gebläseumgehungskanal (30) reduziert und eine Menge an Luftstrom über eine Gondel (28), die sich um ein Gebläse (14) des Gasturbinentriebwerks (10) erstreckt, erhöht, und dem Bewegen der Klappen (64) in eine zweite Position, die den Umgehungsluftstrom (D) durch den Gebläseumgehungskanal (30) erhöht und die Menge an Luftstrom über die Gondel (28) reduziert, auf Grundlage eines Größenkennwerts der Gondel.

10. Verfahren nach Anspruch 9, einschließend selektives Bewegen der Düse (40) in eine von einer Mehrzahl unterschiedlicher Positionen, um eine Erhöhung des Umgehungsluftstroms (D) durch den Gebläseumgehungskanal und eine Reduzierung des Luftstroms (E) über eine Gondel (28) zu erreichen, die sich um ein Gebläse (14) des Gasturbinentriebwerks (10) erstreckt.

11. Verfahren nach Anspruch 9, einschließend selektives Bewegen der Düse (40) in eine von einer Mehrzahl unterschiedlicher Positionen, um eine Reduzierung des Umgehungsluftstroms (D) durch den Gebläseumgehungskanal (30) und eine Erhöhung des Luftstroms (E) über eine Gondel (28) zu erreichen, die sich um ein Gebläse (14) des Gasturbinentriebwerks (10) erstreckt.

12. Verfahren nach Anspruch 9, wobei der aerodynamischen Widerstand die Summe von wenigstens einem aerodynamischen Widerstand über einer Gondel, die sich um ein Gebläse eines Gasturbinentriebwerks erstreckt, und einem aerodynamischen Widerstand durch den Gebläseumgehungskanal umfasst, ferner einschließend Steuern des Umgehungsluftstroms, um den aerodynamischen Widerstand zu reduzieren.

13. Verfahren nach Anspruch 9, einschließend Bewegen der Düse (40), um den Umgehungsluftstrom (D) in Reaktion auf ein Signal zu steuern, das einen Treibstofffluss an das Gasturbinentriebwerk (10) darstellt, oder in Reaktion auf ein Signal, das eine Drehzahl eines Rotors (22a) im Zusammenhang mit einem Kompressor (16a) und einer Turbine (20a) in dem Gasturbinentriebwerk (10) darstellt, oder in Reaktion auf ein Signal, das eine Temperatur eines Abgasstroms (C) darstellt, der von dem Gasturbinentriebwerk (10) erzeugt wird.

14. Verfahren nach Anspruch 9, wobei der Umgehungsluftstrom (D) durch den Gebläseumgehungskanal (30) auf eine Menge von nicht null reduziert wird.

## Revendications

1. Système de moteur à turbine à gaz comprenant :
un moteur à turbine à gaz (10) ayant un état actif et un état d'arrêt ;
un conduit de dérivation de soufflante (30) associé au moteur à turbine à gaz (10) pour acheminer un écoulement d'air secondaire (D) ;
une nacelle (28) qui s'étend sur environ au moins une portion du conduit de dérivation (30) ; et
une buse (40) formant au moins une portion d'une surface extérieure du moteur à turbine à gaz (10) et formant au moins une portion d'une surface externe du conduit de dérivation de soufflante (30) par rapport à un axe médian du moteur (A), **caractérisé en ce que** la buse (40) comprend au moins un volet (64) adjacent au conduit de dérivation de soufflante (30) et au moins un vérin (42) relié à l'au moins un volet (64) pour déplacer l'au moins un volet (64) par rapport au conduit de dérivation de soufflante (30) entre une pluralité de positions différentes ; et **en ce qu'**il comprend en outre
un dispositif de commande (44) pour donner l'instruction à l'au moins un vérin (42) de déplacer l'au moins un volet (64) pour agir sur l'écoulement d'air secondaire (D) afin d'agir sur une traînée aérodynamique qui ralentit le mouvement avant du moteur à turbine à gaz (10) en vol,
dans lequel le dispositif de commande (44) donne sélectivement l'instruction à l'au moins un vérin (42) de déplacer l'au moins un volet (64) par rapport au conduit de dérivation (30) en réponse à l'état d'arrêt pour atténuer la traînée aérodynamique sur le moteur à turbine à gaz (10).

2. Système de moteur à turbine à gaz selon la revendication 1, dans lequel l'état actif correspond à un premier débit de carburant vers le moteur à turbine à gaz (10) et l'état d'arrêt correspond à un second débit de carburant vers le moteur à turbine à gaz (10) qui est inférieur au premier débit de carburant.

3. Système de moteur à turbine à gaz selon la revendication 1, dans lequel le moteur à turbine à gaz (10) inclut un compresseur (16a, 16b), une turbine (20a, 20b) en aval du compresseur (16a, 16b), et au moins un rotor (22a, 22b) qui tourne avec le compresseur (16a, 16b) et la turbine (20a, 20b), dans lequel l'état actif correspond à une première vitesse de rotation du rotor (22a, 22b) et l'état d'arrêt correspond à une seconde vitesse de rotation du rotor (22a, 22b) qui est inférieure à la première vitesse de rotation.

4. Système de moteur à turbine à gaz selon la revendication 1, dans lequel le moteur à turbine à gaz (10) inclut une chambre de combustion (18) qui assure la combustion du carburant pour produire un flux de gaz d'échappement (C), dans lequel l'état actif correspond à une première température du flux de gaz d'échappement (C) et l'état d'arrêt correspond à une seconde température du flux de gaz d'échappement qui est inférieure à la première température.

5. Système de moteur à turbine à gaz selon la revendication 1, dans lequel le moteur à turbine à gaz (10) assure la combustion du carburant pour produire une première poussée dans l'état actif et le moteur à turbine à gaz (10) produit une seconde poussée qui est inférieure à la première poussée dans l'état d'arrêt.

6. Système de moteur à turbine à gaz selon la revendication 1, comprenant en outre un capteur (54b) qui détecte un débit de carburant vers le moteur à turbine à gaz, dans lequel le débit de carburant correspond à l'état d'arrêt, ou un capteur (54a) qui détecte une vitesse de rotation d'un rotor (22a) associé à une turbine (20a) et un compresseur (16a) dans le moteur à turbine à gaz (10), dans lequel la vitesse de rotation correspond à l'état d'arrêt, ou un capteur (54C) qui détecte une température d'un flux de gaz d'échappement (C) produit par le moteur à turbine à gaz (10), dans lequel la température correspond à l'état d'arrêt.

7. Système de moteur à turbine à gaz selon la revendication 1, dans lequel la buse (40) inclut une première position qui permet une première quantité d'écoulement d'air secondaire (D) à travers le conduit de dérivation (30) et une seconde position qui permet une seconde quantité d'écoulement d'air secondaire (D) à travers le conduit de dérivation (30) qui est inférieure à la première quantité d'écoulement secondaire (D).

8. Système de moteur à turbine à gaz selon la revendication 1, dans lequel la nacelle inclut une ouverture vers l'avant ayant une surface en coupe transversale prédéterminée sélectionnée, choisie dans une plage de zones en coupe transversale prédéterminées possibles, et dans lequel le dispositif de commande (44) donne sélectivement l'instruction à la buse (40) de se déplacer par rapport au conduit de dérivation (30) vers l'une de la première position ou de la seconde position sur la base de la surface en coupe transversale prédéterminée sélectionnée.

9. Procédé de commande d'un moteur à turbine à gaz (10) ayant un état actif et un état d'arrêt, comprenant les étapes suivantes :
la fourniture d'une buse (40) qui est associée à un conduit de dérivation (30) du moteur à turbine à gaz (10) pour permettre d'agir sur un écoulement d'air secondaire (D) à travers le conduit de dérivation (30), la buse (40) comprenant au moins un volet (64) adjacent au conduit de dérivation (30) et au moins un vérin (42) relié à l'au moins un volet (64) pour déplacer l'au moins un volet (64) par rapport au conduit de dérivation (30) entre une pluralité de positions différentes ; et
la régulation de l'écoulement d'air secondaire (D) à l'aide de la buse (40) en réponse à l'état d'arrêt pour atténuer une traînée aérodynamique sur le moteur à turbine à gaz (10) en
opérant un choix entre le déplacement des volets (64) vers une première position qui réduit l'écoulement d'air secondaire (D) à travers le conduit de dérivation (30) et augmente une quantité d'écoulement d'air sur une nacelle (28) qui s'étend autour d'une soufflante (14) du moteur à turbine à gaz (10) et le déplacement des volets (64) vers une seconde position qui augmente l'écoulement d'air secondaire (D) à travers le conduit de dérivation (30) et réduit la quantité d'écoulement d'air sur la nacelle (28) sur la base d'une caractéristique de taille de la nacelle.

10. Procédé selon la revendication 9, incluant le déplacement sélectif de la buse (40) vers l'une d'une pluralité de positions différentes pour parvenir à une augmentation de l'écoulement d'air secondaire (D) à travers le conduit de dérivation et une diminution d'une quantité d'écoulement d'air (E) sur une nacelle (28) qui s'étend autour d'une soufflante (14) du moteur à turbine à gaz (10).

11. Procédé selon la revendication 9, incluant le déplacement sélectif de la buse (40) vers l'une d'une pluralité de positions différentes pour parvenir à une diminution de l'écoulement d'air secondaire (D) à travers le conduit de dérivation (30) et à une augmentation d'une quantité d'écoulement d'air (E) sur une nacelle (28) qui s'étend autour d'une soufflante (14) du moteur à turbine à gaz (10).

12. Procédé selon la revendication 9, dans lequel la traînée aérodynamique comprend la somme d'au moins une traînée aérodynamique sur une nacelle qui s'étend autour d'une soufflante du moteur à turbine à gaz et d'une traînée aérodynamique à travers le conduit de dérivation, incluant en outre la régulation de l'écoulement d'air pour diminuer la traînée aérodynamique.

13. Procédé selon la revendication 9, incluant le déplacement de la buse (40) pour réguler l'écoulement d'air secondaire (D) en réponse à un signal représentant un débit de carburant vers le moteur à turbine à gaz (10), ou en réponse à un signal représentant une vitesse de rotation d'un rotor (22a) associé à un compresseur (16a) et une turbine (20a) à l'intérieur du moteur à turbine à gaz (10), ou en réponse à un signal représentant une température d'un flux de gaz d'échappement (C) produit par le moteur à turbine à gaz (10).

14. Procédé selon la revendication 9, dans lequel l'écoulement d'air secondaire (D) à travers le conduit de dérivation (30) est réduit à une quantité non nulle.
